## Europäisches Patentamt
## European Patent Office
## Office européen des brevets

(11) Publication number: **0 118 110**
**B1**

(12) **EUROPEAN PATENT SPECIFICATION**

(45) Date of publication of patent specification: **14.06.89**

(51) Int. Cl.⁴: **H 04 L 5/14**

(21) Application number: **84102187.6**

(22) Date of filing: **01.03.84**

(54) **Digital transceiver for full-duplex transmission of logic signals on a single line.**

(30) Priority: **04.03.83 IT 6724583**

(43) Date of publication of application:
**12.09.84 Bulletin 84/37**

(45) Publication of the grant of the patent:
**14.06.89 Bulletin 89/24**

(84) Designated Contracting States:
**DE FR GB NL SE**

(56) References cited:
**IBM TECHNICAL DISCLOSURE BULLETIN, vol. 15, no. 3, August 1972, pages 998-999, New York, US; J. BESSEYRE: "Ternary detector for bidirectional transmission"**
**PATENTS ABSTRACTS OF JAPAN, vol. 7, no. 115 (E-176) 1260r, 19th May 1983; & JP - A - 58 36 045 (MATSUSHITA DENKI SANGYO K.K.) 02-03-1983**
**PATENTS ABSTRACTS OF JAPAN, vol. 7, no. 166 (E-188) 1311r, 21st July 1983; & JP - A - 58 73 256 (NIPPON DENKI K.K.) 02-05-1983**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Gandini, Marco**
**C.SO Siracusa 118**
**Torino (IT)**
Inventor: **Sartori, Mario**
**Via Brandizzo 98**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

## Description

The present invention relates to a transceiver for full-duplex transmission of logic signals on a single line.

When a full-duplex transmission is effected between two transmitting and receiving terminals (transceivers) through a single line, a composite signal deriving from the superimposition of the signals transmitted by both terminals will be present at the ends of this line.

Each terminal will then comprise circuits permitting separation from the composite signal of the signal coming from the remote terminal. According to the present trend in the technique such transceivers are to be manufactured as integrated circuits.

A number of embodiments of such transceivers as integrated circuits are known in the art. Said transceivers separate the received signal by subtracting from the composite signal the locally generated signal. This subtraction can be effected by using passive components, as described by W. Wilhelm, K. R. Schön and H. Kaiser in the paper "A novel high speed interface circuit saving wiring equipment" (IEEE Journal of Solid State Circuits, Vol. SC. 13, No. 3, June 1978) or active components, as described by the Application in European Patent Application No. 80106016.4, published under No. 26931. Said known solutions are based on an analogic processing of the transmitted signals even though they are logic signals. A digital circuit for separating the signal transmitted by the remote terminal has been described by the Applicant in the Italian Patent Application No. 61083-A/77, filed on 14 January 1977.

In that circuit the locally-generated signal, possibly converted into digital form, is sent to a digital filter which determines the contribution given by said signal to the composite signal present on the line; the signal outgoing from the filter is then subtracted from the composite signal (it too converted into digital form if necessary), to provide a signal proportional to the signal transmitted by the remote terminal; the difference signal is then sent to a digital multiplier for amplitude recovery and, if necessary, to a digital to analog converter which forwards it to the receiver.

A system of this kind is highly complicated by the presence of a digital filter and of possible analog-to-digital and digital-to-analog converters, and cannot easily be integrated.

The present invention provides a digital transceiver simple and easy to integrate.

According to the invention, a transceiver for the transmission of logic signals over a single line comprises a local signal generator, a line driver raising the signals emitted by the local generator to a level suitable for transmission on the line, means for extracting a signal, which is sent over the line by a remote generator, from a composite signal present on the line and comprising a fraction of the locally-generated signal and a fraction of the signal transmitted by the remote generator, and a signal receiver connected to said extracting means, and is characterized in that said extracting means are implemented by logic circuits and comprise:

a pair of threshold circuits, for delivering a signal at high logic level when the voltage at their input is lower than a first and second threshold, respectively, the value of the first threshold ranging between the voltage value corresponding to the low logic level and an intermediate value between the voltages corresponding to the high and low levels, whilst the second threshold has a value comprised between said intermediate value and the voltage value corresponding to the high logic level, the intermediate value being half the sum of the voltages corresponding to the two logic levels;

a multiplexer having two inputs connected to the outputs of said threshold circuits and the output connected to the local receiver for transferring to the output the signal delivered by either threshold circuit depending on the logic value of the signal delivered by the local generator, which signal is sent to a control input of a multiplexer.

To make the invention more understandable reference is made to the annexed drawings in which:

Fig. 1 shows a preferred embodiment of the invention;

Figs. 2a, 2b, 2c show the input-output characteristics of the inverts used in the circuit; and

Fig. 3 is the schematic representation of an alternative embodiment.

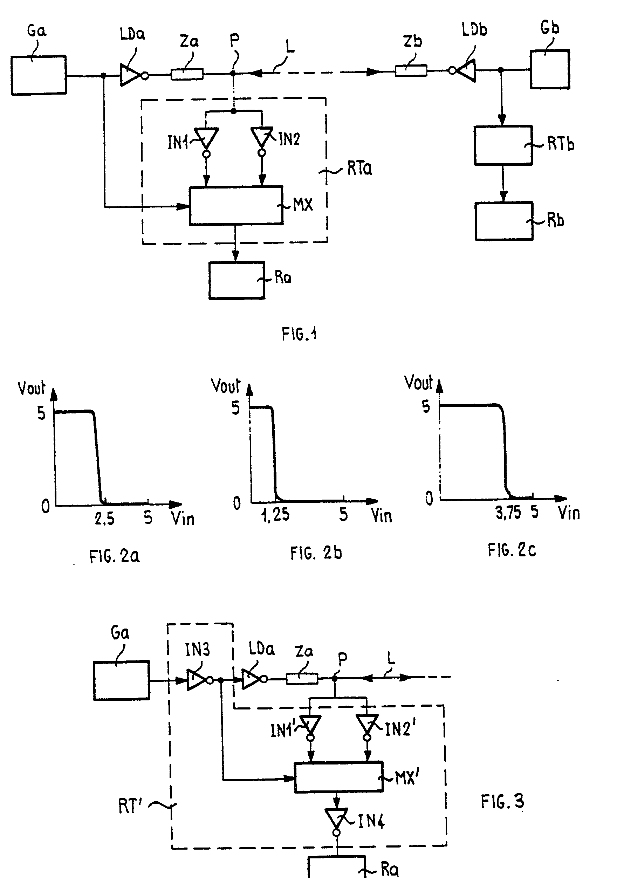

Fig. 1 shows a line L for full-duplex transmission of unbalanced logic signals, with termination impedances Za, Zb.

Line L has associated therewith:

signal generators Ga, Gb, connected to the line through drives LDa, LDb designed to raise the signals delivered by Ga, Gb to the level suitable for transmission; said drivers advantageously consist of inverters with a threshold whose value is intermediate between the voltage values corresponding to high and low logic levels (e.g., as shown in Fig. 2a, the threshold can coincide with the half sum of said values, in particular 2,5 V, in case 0V and 5V voltages are associated with the two logic levels);

receivers Ra, Rb, connected to the line by means RTa, RTb, permitting the separation of the signal transmitted by the remote generator from a composite signal present on the line, said composite signal being the half sum of the signals mitted by Ga, Gb.

Means RTa, RTb can be implemented as integrated circuits jointly with the driver present at the same end of the line. As shown in detail for RTa the extracting means comprises a pair of threshold circuits IN1, IN2, in particular two inverters, connected in parallel to a point P of the line wherein said composite signal is present, as well as a two-input multiplexer MX, controlled by the signal emitted by generator Ga and having the inputs connected to IN1, IN2 and the output connected to receiver Ra.

The two inverters IN1, IN2 are implemented so as to supply a high logic level when the voltage present at their input is lower than a threshold that is different for the two inverters. In particular, the threshold for IN1 is fixed at a voltage value intermediate between the one corresponding to low logic-level and the half sum of the voltages corresponding to the two logic levels; the threshold for IN2 is fixed at a value comprised between said half sum and the high logic level. Under the assumptions made for the voltages associated with the two logic levels, the two thresholds can be 1,25V and 3,75V respectively, as indicated in Figures 2b, 2c.

Preferably, MX connects to RA inverter IN1 when Ga emits a signal at logic level 1 and IN2 when Ga emits a 0 signal.

The device operation is easy to derive from the following Table I and from the investigation of the inverter characteristics. In the table, Va, Vb, VL, V1, V2 are the voltages (in volts) present at the outputs of Ga and Gb, at point P of the line and at the outputs of IN1, IN2 respectively. Near voltage values Va, Vb, V1, V2 the corresponding logic levels are indicated. The voltages present at the output of the inverter not connected to Ra at a given instant are not shown.

TABLE I

| Va | Vb | VL | V1 | V2 |
|------|------|------|------|------|
| 0(0) | 0(0) | +5 | — | 0(0) |
| 0(0) | +5(1) | +2,5 | — | +5(1) |
| +5(1) | 0(0) | +2,5 | 0(0) | — |
| +5(1) | +5(1) | 0 | +5(1) | — |

It is clear that circuits RTa, RTb supply the logic value of the signal emitted by the remote generator depending on the logic values of the signal emitted by the local generator and of the signal present over the line.

It is pointed out that the embodiments described have been given only by way of example and that variations and modifications are possible without going out of the scope of the invention.

In particular owing to reasons depending on integrated circuit technology (in particular, for reasons depending on signal power) the scheme can become that of Fig. 3; transceiver RT' comprises, besides devices IN1', IN2', MX' (identical to IN1, IN2, MX) two further inverters IN3, IN4, having the same threshold as LDa; the first inverter is inserted between Ga and LDa, while the second is inserted between MX' and Ra. Multiplexer MX' is controlled in that case by the signal outgoing from IN3, so as to connect to IN4 inverter IN1 when Ga emits a signal at logic level 0, and IN2 when Ga emits a signal at logic level 1. The same arrangement will be present at the other end of the line.

Indicating by V1', V2', V4 the logic levels at the output of IN1', IN2', IN4 and indicating by simplicity only the logic levels of Va, Vb, the truth table of circuit RT' is the following:

TABLE 2

| Va | Vb | VL | V1' | V2' | V4 |
|------|------|------|------|------|------|
| 0 | 0 | 0 | 1 | — | 0 |
| 0 | 1 | 2,5 | 0 | — | 1 |
| 1 | 0 | 2,5 | — | 1 | 0 |
| 1 | 1 | 5 | — | 0 | 1 |

**Claims**

1. Digital transceiver for full-duplex transmission of logic signals on a single line, comprising a local signal generator (Ga, Gb), a line driver (LDa, LDb) raising the signals emitted by the local generator (Ga, Gb) to a level suitable for the transmission on the line (L), means (RTa, RTb; RT') for extracting a signal which is sent over the line by a remote generator (Gb, Ga), from a composite signal present on the line (L) and comprising a fraction of the locally-generated signal and a fraction of the signal transmitted by the remote generator, and a signal receiver (Ra, Rb) connected to said extracting means (BTa, BTb; RT'), characterized in that said extracting means (RTa, RTb; RT') are implemented by logic circuits and comprise:

a pair of threshold circuits (IN1, IN2, IN1', IN2'), for delivering a signal at high-logic level when the voltage at their inputs is lower than a first and second threshold, respectively, the value of the first threshold ranging between the voltage value corresponding to the low logic level and an intermediate value between the voltages corresponding to the high and low levels, whilst the second threshold has a value comprised between said intermediate value and the voltage corresponding to the high logic level, the intermediate value being half the sum of the voltages corresponding to the two logic levels;

a multiplexer (MX, MX') having two inputs connected to the outputs of said threshold circuits (IN1, IN2, IN1', IN2') and the output connected to the local receiver (Ra, Rb), for transferring to the output the signal delivered by either threshold circuit depending on the logic value of the signal delivered by the local generator (Ga, Gb), which signal is sent to a control input of the multiplexer.

2. Transceiver according to claim 1, characterized in that said extracting means (RT') comprises a third threshold circuit (IN3) connected to one side to the local signal generator (Ga, Gb) and on the other side to the line driver (LDa, LDb) and to the control input of the multiplexer (MX'), and a fourth threshold circuit (IN4), connected between the output of the multiplexer (MX') and the local receiver (Ra, Rb), said third and fourth threshold circuit (IN3, IN4) delivering a high logic-level signal when the voltage at their inputs are lower than a threshold basically corresponding to said intermediate value.

3. Transceiver according to claim 1 or 2, characterized in that inverters are used as said threshold circuits (IN1, IN2, IN1', IN2', IN3, IN4).

4. Transceiver according to any of claims 1 to 3, characterized in that said extracting means (RTa, RTb, RT') are realized as an integrated circuit comprising also the driver (LDa, LDb).

## Patentansprüche

1. Digitaler Senderempfänger für die Vollduplex-Übertragung von logischen Signalen über eine einzige Leitung, mit einem örtlichen Signalgenerator (Ga, Gb), einem Leitungstreiber (LDa, LDb), der die vom örtlichen Generator (Ga, Gb) emittierten Signale auf einen für das Senden auf der Leitung (L) geeigneten Pegel anhebt, einer Einrichtung (RTa, RTb; RT') zum Extrahieren eines über die Leitung von einem entfernten Generator (Gb, Ga) gesendeten Signals aus einem auf der Leitung (L) liegenden zusammengesetzten Signal, das einen Bruchteil des örtlich erzeugten Signals und einen Bruchteil des vom entfernten Generator gesendeten Signals enthält, und einem Signalempfänger (Ra, Rb), der mit der extrahierenden Einrichtung (RTa, RTb; RT') verbunden ist, dadurch gekennzeichnet, daß die extrahierende Einrichtung (RTa, RTb; RT') aus logischen Schaltungen aufgebaut ist und folgende Einzelschaltungen umfaßt:

zwei Schwellenschaltungen (IN1, IN2, IN1', IN2') zum Abgeben eines Signals hohen logischen Pegels dann, wenn die an ihren Eingängen anliegende Spannung niedriger ist als eine erste Schwelle bzw. eine zweite Schwelle, von denen der Wert der ersten Schwelle zwischen dem dem niedrigen logischen Wert entsprechenden Spannungswert und einem Zwischenwert zwischen den dem hohen und dem niedrigen Pegel entsprechenden Spannunswwerten in Höhe der halben Summe dieser Pegel liegt, während die zweite Schwelle einen Wert aufweist, der zwischen diesem Zwischenwert und dem dem hohen logischen Wert entsprechenden Spannungswert liegt;

einen Multiplexer (MX, MX') mit zwei Eingängen, die mit den Ausgängen der Schwellenschaltungen (IN1, IN2, IN1', IN2') verbunden sind, und mit einem Ausgang, der mit dem örtlichen Empfänger (Ra, Rb) verbunden ist, zum Durchschalten des von einer der beiden Schwellenschaltungen eintreffenden Signals zu seinem Ausgang in Abhängigkeit vom logischen Wert des vom örtlichen Generator (Ga, Gb) gelieferten Signals, das an einen Steuereingang des Multiplexers angelegt ist.

2. Senderempfänger nach Anspruch 1, dadurch gekennzeichnet, daß die extrahierende Einrichtung (RT') eine dritte Schwellenschaltung (IN3), die einerseits mit dem örtlichen Signalgenerator (Ga, Gb) und andererseits mit dem Leitungstreiber (LDa, LDb) und mit dem Steuereingang des Multiplexers (MX') verbunden ist, und eine vierte Schwellenschaltung (IN4), die zwischen den Ausgang des Multiplexers (MX') und dem örtlichen Empfänger (Ra, Rb) eingesetzt ist, enthält, wobei die dritte und die vierte Schwellenschaltung (IN3, IN4) ein Signal des hohen logischen Pegels liefern, wenn die Spannungen an ihren Eingängen niedriger sind als eine im wesentlichen dem Zwischenwert entsprechend Schwelle.

3. Senderempfänger nach Anspruch 1 oder 2, dadurch gekennzeichnet, daß als Schwellenschaltungen (IN1, IN2, IN1', IN2', IN3, IN4) Inverter verwendet werden.

4. Senderempfänger nach einem der Ansprüche 1 bis 3, dadurch gekennzeichnet, daß die extrahierende Einrichtung (RTa, RTb, RT') als integrierte Schaltung ausgeführt ist, die auch den Treiber (LDa, LDb) enthält.

## Revendications

1. Emetteur-récepteur numérique pour la transmission en duplex de signaux logiques au moyen d'une seule ligne, comprenant un générateur lokal de signaux (Ga, Gb), un circuit de pilotage de la ligne (LDa, LDb) qui porte les signaux émis par le générateur local (Ga, Gb) à un niveau convenable pour la transmission sur la ligne (L), des moyens (RTa, RTb; RT') pour extraire un signal transmis sur la ligne par un générateur éloigné (Gb, Ga), à partir d'un signal composé présent sur la ligne (L) et comprenant une fraction du signal engendré localement ainsi qu'une fraction du signal transmis par le générateur éloigné, et un récepteur de sigxaux (Ra, Rb) connecté aux moyens d'extraction (RTa, RTb; Rt'), caractérisé en ce que les moyens d'extraction (RTa, RTb; RT') sont réalisés à l'aide de circuits logiques et comportent:

une paire de circuits à seuil (IN1, IN2, IN1', IN2'), pour émettre un signal à niveau logique haut lorsque la tension à leur entrée est inférieure à un premier et un deuxième seuil, respectivement, la valeur du premier seuil étant comprise entre la valeur de tension correspondant au niveau logique bas et une valeur intermédiaire entre les tensions correspondant aux niveaux logiques haut et bas, tandis que le deuxième seuil a une valeur comprise entre la valeur intermédiaire et la valeur de tension correspondant au niveau logique haut, la valeur intermédiaire étant la moitié de la somme des tensions correspondant aux deux niveaux logiques;

un multiplexeur (MX, MX') qui a deux entrées connectées aux sorties des circuits à seuil (IN1, IN2, IN1', IN2') et la sortie connectée au récepteur local (Ra, Rb), pour transférer le signal fourni par l'un ou l'autre circuit à seuil d'arès la valeur logique du signal émis par le générateur local (Ga, Gb), signal qui est envoyé a une entrée de commande du multiplexeur.

2. Emetteur-récepteur selon la revendication 1, caractérisé en ce que les moyens d'extraction (RT') comportent un troisième circuit à seuil (IN3) connecté d'un côté au générateur local de signaux (Ga, Gb) et de l'autre côtá au circuit de pilotage de la ligne (LDa, LDb) et à l'entrée de commande du multiplexeur (MX'), et un quatrième circuit à seuil (IN4), connecté entre la sortie du multiplexeur (MX') et le récepteur local (Ra, Rb), le troisième et le quatrième circuit à seuil (IN3, IN4) délivrant un signal à niveau logique haut lorsque la tension à leur entrée est inférieure à un seuil correspondant substantiellement à la valeur intermédiaire.

3. Emetteur-récepteur selon la revendication 1 ou 2, caractérisé en ce qu'on utilise des inverseurs comme circuits à seuil (IN1, IN2, IN1', IN2', IN3, IN4).

4. Emetteur-récepteur selon l'une quelconque des revendications 1 à 3, caractérisé en ce que les moyens d'extraction (RTa, RTb, RT') sont réalisés comme un circuit intégré comprenant également le circuit de pilotage (LDa, LDb).

FIG.1

FIG. 2a

FIG. 2b

FIG. 2c

FIG. 3

1